# EUROPEAN PATENT SPECIFICATION

(11) **EP 2 638 636 B1**
(45) Date of publication and mention of the grant of the patent: **16.10.2019**
(21) Application number: 11802626.9
(22) Date of filing: 03.11.2011
(51) Int. Cl.: H04B 1/707, H04J 13/16, H04W 24/02

(54) **REDUCTION OF INTERFERENCE IN MOBILE TELECOMMUNICATIONS SYSTEMS**
INTERFERENZVERRINGERUNG IN MOBILEN TELEKOMMUNIKATIONSSYSTEMEN
RÉDUCTION DES INTERFÉRENCES DANS DES SYSTÈMES DE TÉLÉCOMMUNICATION MOBILES

(30) Priority: 12.11.2010 EP 10290605
(43) Date of publication of application: 18.09.2013
(73) Proprietor: Alcatel Lucent, 91620 Nozay (FR)
(72) Inventor: SHAHID, Malek, Chippenham, Wiltshire SN14 0TJ (GB); CLAUSSEN, Holger, Straffan Co. Kildare (IE); SAMUEL, Louis, Gwyn, Dublin (IE); HO, Lester Tse Wee, Dublin 15 (IE)
(74) Representative: Bryers LLP
(86) International application number: PCT/EP2011/005536
(87) International publication number: WO 2012/062427

(56) References cited:
- EP-A1- 2 214 434
- WO-A1-2009/156765
- WO-A2-2008/093100
- US-A1- 2008 039 141

## Description

### Field of the Invention

The present invention relates to a mobile telecommunications system, and in particular to the reduction of interference within a cell of the system, which may be caused by transmissions of neighbouring cells.

### Background Art

In third generation wireless mobile communications, and in particular to the Universal Mobile Telephone System (UMTS} and other systems employing CDMA, RF transmissions between a base station and user equipment are subject to two main coding operations. Firstly a spreading using channelization code, known as CDMA, is applied to separate individual transmission channels.

Secondly, a scrambling code is applied to transmissions in order to distinguish transmission operations in one cell from those of neighbouring cells. The requirements for scrambling and channelization codes are set out in Standard 3GPP TS 25.213 V9.1.0 (2009-12). It has however been found that there is a risk of interference with transmissions from neighbouring cells, which may be operating on the same carrier frequency, but employing different scrambling codes. This arises because, unlike CDMA codes, scrambling codes are non-orthogonal. The above 3GPP Standard specification does not provide any guidance on this problem.

WO 2008/093100 (Ubiquisys) relates to control of RF transmit power in femtocells for the purpose of reducing interference of neighbouring cells, wherein a carrier frequency and scrambling code from lists provided to it from a management system. The lists are shared with other base stations so that the carrier frequency and scrambling code are chosen to result in lowest interference to neighbor cells. In selection of scrambling code, if there are unused codes, then a scrambling code is chosen on a random basis from such unused codes. If however there is not an unused code, then the code is selected with the lowest code channel signal power, CPICH_ RSCP.

Further improvements are desirable in reducing interference between neighbouring cells, in particular femtocells and other small cells, and in particular in the choice of Primary Scrambling codes, in a process that may be efficiently employed in an auto-configuration deployment.

### Summary of the Invention

The present invention provides, in a first aspect, a method for transmission in a mobile telecommunications system, comprising:
performing a scanning or network listening operation in a first cell to monitor transmissions of one or more neighbouring cells, and determining scrambling codes of said transmissions and determining timing offsets, with respect to the timing of said first cell, of said transmissions; and
providing a scrambling code and a timing offset for a scrambling code for use in transmissions within said first cell, comprising determining, either in a pre-characterisation step or in a real-time process, cross-correlation values between said codes of neighbouring cells and scrambling codes that may be employed in said first cell, and cross-correlation values as a function of timing offset between said codes of neighbouring cells and scrambling codes that may be employed in said first cell, the function comprising, for each pair of said codes of neighbouring cells and scrambling codes, offsetting the codes by the timing offset and computing a sum of the point multiplication of the codes and selecting, in dependence on said cross- correlation values, a scrambling code and a timing offset for said first cell, which has a reduced likelihood of interference with transmissions of neighbouring cells wherein in an initial characterisation process, one or more cross-correlation matrices are derived containing information as to cross-correlation values between scrambling codes that may be employed, and cross-correlation values as a function of timing offset that may be employed, and the method comprising employing said matrices as lookup tables in said steps of providing a scrambling code and timing offset.

In a second aspect, the invention provides apparatus for a mobile telecommunications system, wherein the system includes a base station means for communicating with user equipment within a first cell region, and the apparatus comprising scanning means or listening means for monitoring transmissions of one or more neighbouring cells, means for determining scrambling codes of said transmissions and for determining timing offsets of said codes, with respect to the timing of said first cell, of said transmissions, and cross-correlation means for determining cross-correlation values between the determined codes and scrambling codes that may be employed in said first cell, and cross-correlation values as a function of timing offset between the determined codes and scrambling codes that may be employed, the function comprising, for each pair of the determined scrambling codes and scrambling codes that may be employed in said first cell, offsetting the codes by the timing offset and computing a sum of the point multiplication of the codes; and means for selecting, in dependence on said cross-correlation values, a scrambling code and a timing offset for said first cell which has a reduced likelihood of interference with transmissions of neighbouring cells wherein said means for determining scrambling codes includes cross-correlation matrix means, which includes information of cross-correlations between available scrambling codes, and information of cross-correlations as a function of relative timing offsets between available scrambling codes.

Thus, embodiments of the invention may operate by providing a revised scrambling code for the first cell in dependence on cross-correlation values of potential scrambling codes with scrambling codes and timing offsets of neighbouring cells. Alternatively, embodiments of the invention may operate by providing a timing offset to revise the timing of the scrambling code of the first cell in dependence on cross-correlations with scrambling codes and timing offsets of neighbouring cells. In a specific embodiment as described below, a revised scrambling code together with a revised timing offset for the scrambling code of the first cell are provided in dependence on cross-correlations with both scrambling codes and timing offsets of neighbouring cells. In embodiments of the invention, assignment of Primary Scrambling Code (PSC) to CMDA-based (CDMA and W-CDMA) base stations and control of the relative timing offset is carried out such that mutual interference is reduced or eliminated. This procedure is applicable to any system based on spread spectrum-based systems such as WCDMA, CDMA, etc and includes systems which have been implemented or are proposals for future implementation.

Said apparatus may be located in the base station means, which may be a base station router (BSR) for use with small cells. Conceivably, the apparatus might be located elsewhere, for example in User Equipment (UE) under the control of the respective small cell. An embodiment is concerned with processing the downlink Primary Scrambling Code (PSC) that is determined by the UE in an initial cell search procedure. Conceivably, an embodiment may be concerned with processing Secondary Scrambling Codes.

The method is applicable particularly to small cells such as micro-, pico- and femtocells, where the problems of interference with neighbouring cells may be more marked than with very large macro cells due to the fact that small cells are deployed in larger numbers and also exist, in general, under the coverage of the macro cell. However the method is applicable to all scenarios with cells used in either embedded form (small cells within the coverage of macro cell), or adjacent cells (macro near macro cell, or small cells near another small cell). Small cells are likely to be deployed en masse (i.e. larger number than those used as macro), hence the issues encountered would be more apparent and severe on the performance of the network.

In an embodiment, transmissions of neighbouring cells are scanned or monitored and assessed in terms of timing relative to the subject cell, and in terms of scrambling codes used by these cells. In addition transmissions below a threshold strength may be disregarded as unlikely to cause interference. In one embodiment, in order to determine scrambling codes and timing offsets, the base station or BSR of the subject cell, which may be a new cell being installed, acts in a listening mode as a UE, using a "sniffer" function to perform the measurements and decoding of SIB messages of the other cells.. In order to emulate the function of a UE (User Equipment), the base station includes all necessary information, files and codes. SIB (System Information Blocks) are broadcast to a UE from a base station (Node B, RNC) and from the Core Network, and are part of the Radio Resource Protocol (RRC) defined in Specification 3G TS 25.331. Hence the decoding of SIB of neighbouring cells may provide the BSR with the information it needs in terms of scrambling codes and timing offsets in use by neighbouring cells. The emulated UE may then undergo the specific synchronization process and scrambling code process, which is defined in Standard 3GPP TS 25.214., to determine the Primary Downlink Scrambling Code of a neighbouring cell. In an alternative embodiment, the BSR may include a scanning mechanism which acts to monitor all interfering transmissions for the BSR.

An embodiment provides one or more cross-correlation matrices that have been determined in an initial characterising step, and which contain information as to the cross-correlation between scrambling codes that may be used, and how the cross-correlation is affected by relative timing offsets between the codes. In use, the matrices may be accessed, once codes and timings of neighbouring cells have been determined, to provide scrambling codes and timing offsets for the subject cell. Whilst the initial characterising step may involve an extremely thorough analysis of all possible cross-correlations, the information present in the matrices may be a very much reduced subset of all this information, from the point of view of reducing cost and complexity. Thus for any particular code, a cross correlation matrix may contain a list of codes that will reduce interference to an acceptable level. The matrix may also contain optimum timing offsets for each of the listed codes that will reduce interference to a minimum level. However more complex arrangements may be envisaged. For example a matrix may be provided with rows representing relative timing offsets, and columns, one for each possible combination of code pairs, giving cross-correlation values.

An alternative to using pre-calculated matrices is to perform a real-time calculation of the best scrambling code and offset. In this embodiment, the base station, after scanning the scrambling codes and determining the offsets of detected neighbours, would perform the cross correlation of all scrambling codes in its database. It then selects the scrambling code and offset with the best (lowest) cross correlation. This gives the base station more flexibility in the decision making process, and negates the need for operators to ensure the selection matrices are up-to-date with allowed scrambling codes. Obviously the amount of computational resources required at the base station for this embodiment is higher.

An embodiment may additionally include adjusting the power levels of transmission and/or frequency of transmission in said first cell, in dependence on interference levels from neighbouring cells, in order further to reduce interference levels.

### Brief Description of the Drawings

Embodiments of the invention will now be described, by way of example only, with reference to the accompanying drawings, wherein:
Figure 1 is a diagram showing typical levels of cross-correlation of the 512 Primary Scrambling Codes, and improvements in reduction of interference which may be achieved with the present embodiment;
Figures 2A and 2B are plots showing cross-correlation between two specific primary scrambling codes, as a function of timing offset;
Figure 3 is a block diagram of the transmission section of a Base Station router (BSR) of a femtocell, incorporating a first embodiment of the invention;
Figure 4 shows tables illustrating some primary codes with relative cross-correlations and timing offsets, which are extracts from a cross-correlation matrix that may be employed in the embodiment of Figure 3; and
Figure 5 is a flow chart of a real-time process according to a second embodiment of the invention for determining scrambling codes.

### Description of the Embodiments

Embodiments of the invention address the issue of automatic downlink scrambling code configuration of small cell Base Station Routers (BSR).

Cells are usually classified by cell radius and maximum output power as defined in 3GPP (TS25.104). Macro cells can be regarded as cells where the base station antenna is installed on a mast or a building above average roof top level. Microcells are cells whose antenna height is under average roof top level; they are typically used in urban areas. Picocells are small cells whose coverage diameter is a few dozen metres; they are mainly used indoors. Femtocells are cells designed for use primarily in residential or small business environments and connect to the service provider's network via a broadband internet connection. Umbrella cells are used to cover shadowed regions of smaller cells and fill in gaps in coverage between those cells. For the purposes of the present invention, "small cells" are regarded as cells which fall into one of the above categories, other than the category of macro cells.

Base Station Routers (BSR) are commonly designed for use with femtocells for example within the home. The Router is of a small size, for example a single large circuit board, and besides having the functionality of a base station, additionally includes network functions of Radio Network Control and core network router functionalities, so that the router can be connected to an existing network, without requiring any modification of the network.

A known procedure for invoking the scrambling process (Standard 3GPP TS 25.214) is that User Equipment (UE) performs a synchronization operation on synchronization channels, identifying synchronization codes that are common to all cells. Having synchronised to the appropriate Base Station (BS), the UE then decodes the downlink Primary Scrambling Code (PSC), which is unique to that BS. This is done by a correlation operation, using the possible PSCs available. Once this is done, cell-specific information broadcast by the BS can then be read by the UE. Further secondary scrambling codes, related to the PSC, may be invoked, for further operations.

As stated in the above referenced standard Specification TS 25.213 "The scrambling codes are divided into 512 sets each of a primary scrambling code and 15 secondary scrambling codes. The primary scrambling codes consist of scrambling codes n=16*i where i=0...511. The i:th set of secondary scrambling codes consists of scrambling codes 16*i+k, where k=1...15". There is a one-to-one mapping between each primary scrambling code and 15 secondary scrambling codes in a set such that i:th primary scrambling code corresponds to i:th set of secondary scrambling codes."

There is a risk of interference with transmissions from neighbouring cells, which may be on the same carrier frequency, while employing different scrambling codes. This arises because scrambling codes are non-orthogonal. Further this risk is particularly apparent when dealing with small cells such as femtocells, which generally employ the same carrier frequency as other neighbouring femtocells.

In this embodiment, scrambling code selection made by the small cells is based on minimizing interference from other adjacent cells (e.g. macro cells or femtocells). Since scrambling codes are non-orthogonal, the selection of code and adjusting a coordinated or relative time offset will allow great reduction of cross-talk between different cells.

One of the main aspects of small cells provisioning is the cell set up procedure, which requires the assignment of a primary scrambling code. In UMTS, a cell (or sector) is identified by the downlink scrambling codes. The 3GPP standard specifies a total of 2¹⁸-1 = 262,143 scrambling codes, numbered 0...262,142 that can be generated. However not all the scrambling codes are used. The scrambling codes used by the UMTS system are divided into 512 sets each of a primary scrambling code and 15 secondary scrambling codes (total number of codes is 8192 codes).

In this embodiment, to exploit a low cross correlation between scrambling codes, the subject small cell is required to identify the scrambling codes being used by other neighbouring cells (macro cells and small cells) and then assign itself a code and an offset relative to the other cells. This will enable signal reception within the cell (often a RAKE receiver is used within the BS or BSR) to benefit from the lowest peak of the cross correlation between unwanted codes (i.e. used by other cells) and its own selected code. The subject small cell uses a listening mode upon powering up or during optimization time to identify the primary scrambling codes (PSC) used by other cells, to select a PSC for use within the subject cell, and to derive the required relative timing offset, such that interference is reduced.

In some cases, the subject small cell may be given a subset of the possible 512 primary scrambling codes to use. In this case, the small cell selects a code from this subset that will reduce interference. The codes are reused by the small cells based on reduction of interference as well, since the scrambling code selection of the small cells would be made to maximize orthogonality between other neighbouring small cells.

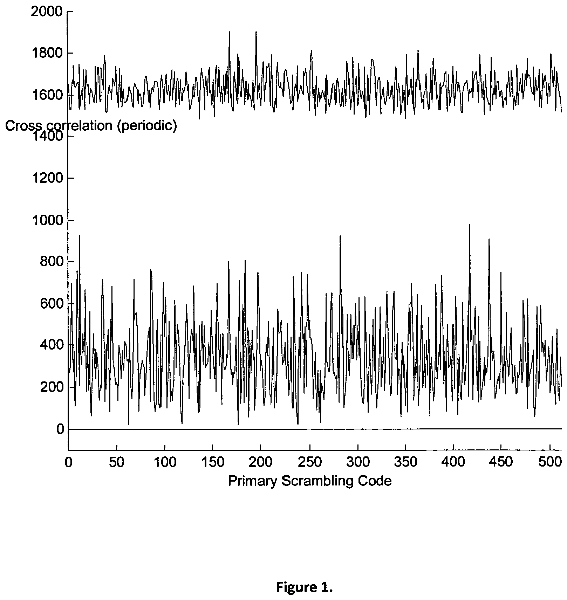

Referring to Figure 1, the diagram shows the cross correlation (the y-axis) between the 512 primary scrambling codes (the x-axis), and other primary scrambling codes. It is evident that the value of the cross correlation is dependant on the codes being cross-correlated. The value of cross correlation can be:
1. High value of about 1600 as indicated in the uppermost line, which represents maximum cross-correlation between the code of the x-axis and other codes. This will inevitably result in higher interference between two cells using these codes.
2. Low value with value oscillating around 400, as indicated in the centre line, which represents cross-correlation between the code of the x-axis and other randomly selected codes and offsets.
3. An ideal value of 0, as represented by the lowermost line, and which may be achieved in accordance with this embodiment.

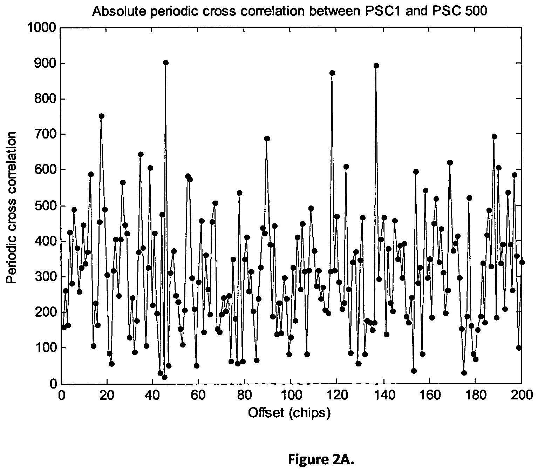

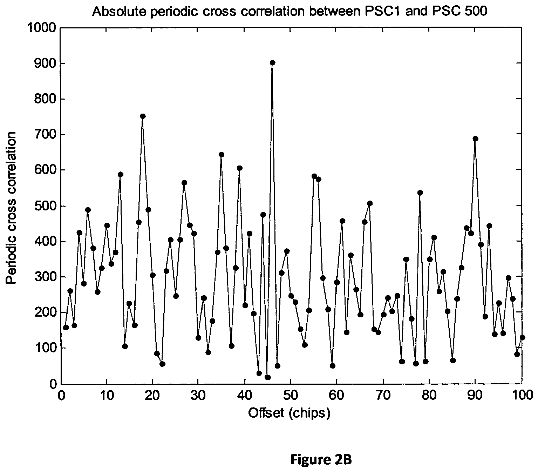

Relative timing offset allows further reduction of interference. This can be seen by studying the results of the cross correlation between two codes, as shown in Figures 2A and 2B. The result changes as the time offset is varied (this is how cross correlation is done, the codes are offset, and for every offset the sum is taken of the point multiplication of the two codes). Figure 2A shows cross correlation between PSC1 and PSC500 over an offset period of 200 chips (a chip is a small unit of time increment as defined in 3G standards). Figure 2B is an enlarged view of Figure 2A, showing an offset period of 100 chips. It may be seen that cross correlation is strongly dependent on timing offset. For example, in the region between 40 and 50, there are strong maxima and minima in adjacent offset time periods (chips).In another specific example, for two scrambling codes PSC1 and PSC2, they have a mean cross correlation value of 311.9 over the chip timing offset range of 40,000, there is a minimum correlation value of 2 at offset 13457, and a maximum correlation value of 1238 at offset 14179 (which is close to offset 13457). So, two codes will result in peaks and troughs in their corresponding cross correlation. The aim is not only finding the two codes that yield the lower cross correlation at some point, rather we may wish also to adjust the cells timing such that the cross correlation always provides the lowest correlation peak in the result. The combination of timing offset and selection of codes provides the ability to cater for many interfering cells without running out of option.

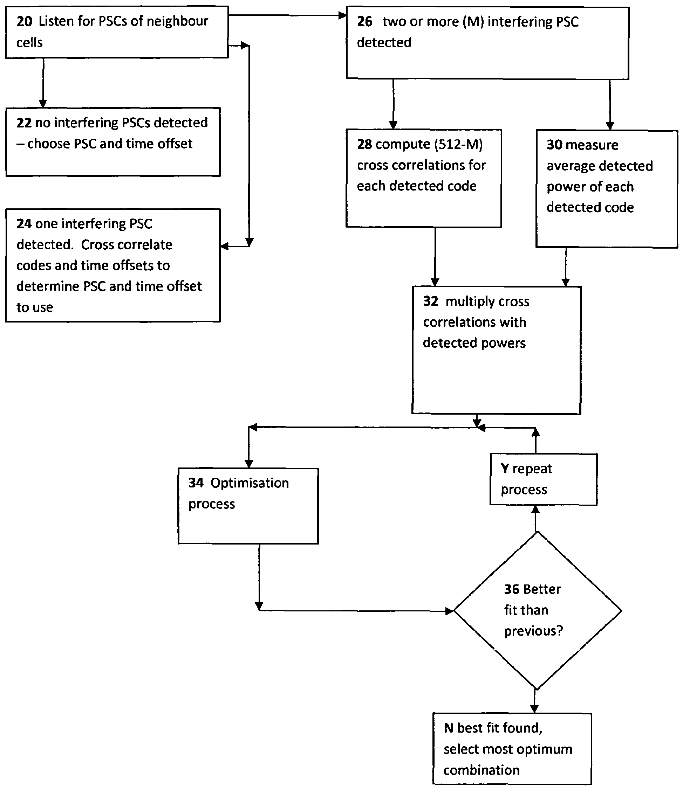

The subject small cell is required to perform the following operations to derive information either in real time, or offline in a preliminary operation. Steps are as follows:
1. Generation of a minimum cross correlation matrix and an associated timing offset vector. As 3GPP allows the use of 512 primary scrambling codes, the cross correlation of all these codes is pre-computed and characterized. Thus we study the cross-correlations and identify the set of codes that yield low peaks, the corresponding timing offset. So, in use, when a cell finds that code x is being used, then and based on the pre computed data, it is determined that code y, z, etc are good to use for this cell. Also, the cell has the knowledge of what timing offset it should give itself (it measures the timing reference of the other located cells). Since these codes are not orthogonal, the cross correlation is a function of the codes in use and time offset. For a particular pair of codes, the cross correlation exhibits peaks and troughs. The maximum peak of each cross-correlation of different code pairs varies in a range between maximum and minimum. Also, the minimum peak will be different for different pairs of codes. The relative time offset at which the cross correlation yields the lowest peaks is of particular interest. The interference between two cells using a given pair of codes will therefore be reduced as a timing synchronization offset is maintained between the cells using the codes such that the cross-correlation is yielding low value at the decision point at the output of the rake receiver. The cross correlation matrix includes all low or minimum cross correlations between all codes, and a timing offset vector includes the corresponding timing offset for which the cross correlation between the two codes is minimal. This is performed offline and can be stored in the base station. At the minimum, the cross-correlation matrix can contain information of the best PSC and offset to use for each of the 512 PSCs. A larger matrix (or matrices) may contain not just the best PSC and offset, but also the second best, third best, and so on. This is useful in cases where the density of small cells is high, and the best PSC has already been used by a nearby base station, requiring the use of an alternative "second best" PSC. In cases where the density of small cells is high, and several interfering PSC are detected, then an optimization process may be employed, as subsequently described with reference to Figure 5. Thus cross-correlation values are multiplied or weighted by received power levels of interfering PC, and the results are optimized in a logic loop which includes an optimization algorithm.
2. During operation, upon initialization of the BSR of a small cell, its downlink primary scrambling code (PSC) and timing offset with respect to the other interfering cells is selected such that the cross correlation between the chosen code and the interfering codes is minimized. Owing to the fact that cells have independent clock sources and the relative time offset may drift, this operation may be updated continually at appropriate time interval in order to keep the synchronization between cells. For the downlink scrambling codes, the interfering codes of neighbouring cells and their received signal strength are obtained from UE measurement reports provided to the BSR, or alternatively measured by the small cells during network listening periodic function. This enables the BSR to initiate the scrambling code and time offset selection operation, by interrogating the minimum cross correlation matrix. For the uplink scrambling codes employed by the UE, the base station allocates all codes in dependence on the selected PSC, but the codes used by the various UEs are also selected based on minimizing the mutual interference between the different UEs.

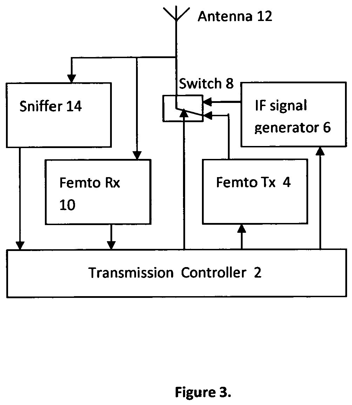

Figure 3 shows a small cell high level architecture, in particular the transceiver section of BSR of the femtocell. The transceiver comprises a transmission controller 2, a femto transmitter 4, an IF signal generator 6, which is coupled to transmitter 4 via a switch 8. An antenna 12 is coupled to the transmitter, and to a femto receiver 10. In addition a further receiver module 14, termed a Sniffer, is provided, and is invoked to measure the radio surroundings of the small cells. This module is intended for use in each of a neighbouring group of small cells and is used upon power up or for continuous self optimization. Sniffer 14 is a receiver module which operates to listen to other cells in a specified band (i.e. carrier frequency) and operates to obtain information on what scrambling code is being used by other cells (macros and small cells alike). It is a tunable receiver operating on one carrier frequency at a time but may also be designed to scan multiple carrier frequencies at the same time, so it scans that band for all cells using that frequency. In effect the Sniffer 14 turns the BSR into a UE in a receive mode, that is the BSR emulates the functions of a UE in receive mode, and to this end is provided with all necessary SIM files, codes and other information. The primary objective is to find what cells are present, what primary scrambling codes being used and the timing of each cells found. The emulated UE performs the measurements and decoding of SIB messages of the cells found. SIB (System Information Blocks) are broadcast to a UE from a base station (Node B, RNC) and from the Core Network, and are part of the Radio Resource Protocol (RRC) defined in Specification 3G TS 25.331. Hence the decoding of SIB of neighbouring cells may provide the BSR with all the information it needs in terms of scrambling codes and timing offsets in use by neighbouring cells. The emulated UE may then undergo the specific synchronization process and scrambling code correlation process, which is defined in Standard 3GPP TS 25.214, to determine the Primary Downlink Scrambling Code and timing offset of each neighbouring cell.

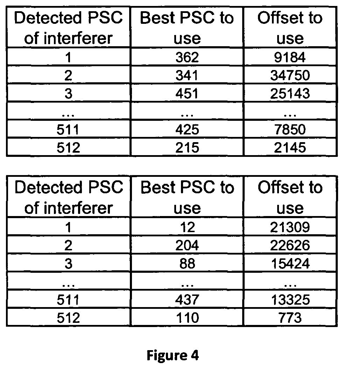

Having determined a scrambling code, the sniffer unit 14 then accesses a look up table, to determine appropriate scrambling codes and timing offsets for use by the subject cell. Exemplary look-up tables are shown in Figure 4, Figure 4 showing tables illustrating some primary codes with relative cross-correlations and timing offsets. These are extracts from a simplified cross-correlation matrix that may be employed in the embodiment of Figure 3.

Commonly small cells and macro cells operate using shared carrier (i.e. same carrier). Also, note that, in general, small cells use one carrier but differ by using different PSCs. The critical matter is that shared carrier means the only means to control interference is by using different PSCs and to control output power. However, a careful selection and coordination of the PSCs and their relative time offset has shown to offer an additional means to lower mutual interference. The sniffer can scan different carriers in case we want to switch the small cells carrier frequency to another one from the allowed set (usually operators have more than one carrier in their license), so we propose to have auto-configuration of carrier frequency for the small cells in order to add more dimensions to interference mitigation and control.

Further auto-configuration will also be used such as optimisation of the transmit power, in the sense that risk of interference with a neighbouring cell may be reduced by adjusting transmit power of each cell to ensure carefully control based on the indented coverage area.

The primary scrambling code allocation has an impact on level of interference received from other adjacent cells which manifests itself as a noise rise on the receiver side.
In use the present embodiment operates as follows:
1. Small cells power up;
2. Small cell is assigned a predefined frequency band and carrier (information based on e.g. downloaded from an OA&M system);
3. Small cell scans the allocated carrier for scrambling codes used by adjacent cells;
   a. There is no cell detected, then the small cell assigns itself a scrambling code (can be a default stored in the small cell or selected randomly). This scenario may happens in greenfield case with no existing underlay network, or in remote network deployment
   b. There is one code in use in detected cell (either Macro/Micro/pico or other small cell). The small cell then assigns itself a code based on the following criteria:
      i. Code yielding the lowest cross correlation with that discovered and being used by other cell.
      ii. Code generation process is used from pre computed table.
      iii. Timing synchronization and offset with that cell is maintained.
   c. A number of codes have been detected.

For auto cell primary scrambling code allocation, planning, it is convenient to visualize the small cell (homes) as hexagonal cells. The location of the centre cell as well as the other cells may be established using, for example, location based services when an existing macro network exists.
1. The code group selected for a cell is based on the cross correlation with other discovered codes.

In all cases above, a relative time offset is also computed in order to align the small cell receiver with the optimum point at which the lowest cross correlation occurs.

The above embodiment provides an efficient method for interference management for small cells while using the same carrier frequency as the macro cell and indeed when other small cells exist that are using the same carrier frequency.

An advantage of this embodiment is that the proposed method is low cost and easy for implementation. It utilises the characteristics of the codes used in order to yield the lowest possible mutual interference.

Referring now to a second embodiment, a real-time computation is provided where the small cell scans the air interface for the codes being used by other cell, and then it performs the computation based on real-time data to determine the best code and corresponding offset to use, this process is performed using the processor of the small cell. The process is as follows, referring to Figure 5:
(1) During operation, the scrambling code and timing offset with respect to the other "interfering" cells is selected such that the cross correlation between the chosen code and the interfering codes is minimized, as follows.
(2) Small cell powers up
(3) Small cell is assigned a predefined frequency band and carrier (information based on e.g. downloaded from an OA&M system).
(4) Small cell scans (20, Figure 5) the allocated carrier for scrambling codes used by adjacent cells. The following cases may be expected to be present:
   a. There is no other cell detected (22), then the small cell assigns itself a scrambling code (can be a default stored in the small cell or selected randomly). This scenario may happens in greenfield deployment case with no existing underlay network or small cells network, or if the small cell us being deployed in remote areas or isolated premise.
   b. There is one code in use in detected cell (24) (either Macro/Micro/pico or other small cell). The small cell then assigns itself a code based on the following criteria: Determining the scrambling code and best relative offset with that yield the lowest cross correlation with the discovered code. In this case, the small cells performs the cross correlation of the detected code with those 511 other codes (note that there are 512 codes used for scrambling code).
   c. A number of codes have been detected (26): Determining the scrambling code and best relative offset from the set of codes which yield the lowest cross correlation with the discovered codes.

Case c. is seen as a general case of b, but we exploit the fact that the small cells does not need to compute more than 511 cross correlations. That means that even in the case of detecting more than one code being used by other cells (i.e. there are more than other cell in the vicinity), then the small cells still computes the same data when it comes to cross correlation and determining the best code with the appropriate offset to use. Thus, the cross correlations of the discovered code is first computed, then the small cell performs optimization process in order to find the "best option" from the for example 508 remaining codes (assuming we discovered 4 codes) in terms of code and corresponding offset. The small cell computes 507 cross correlations and searches amongst them for one code that at a given offset yields the "best" cross correlation (best means lower cross correlation here). The best might not be the lowest possible when one cross correlation is performed, but is the code and offset that offers optimum interference reduction.

Therefore, referring to Figure 5, Cross correlation is performed (28).

Relative power of each discovered code is measured (30) by the UEs (when there is at least one under the small cell coverage) and the small cell. An average value is then computed.

Cross correlation is computed between code x relative average receive power (32) (this multiplication provides us with a measure on how bad the interference is from the cell using that code).

The "weighted" cross correlation is then used in a logic loop (34, 36) to find the code from the remaining set that provides a best fit. In the logic loop, an optimization process or algorithm is employed to assess weighted cross-correlations. Any suitable optimization algorithm (34) may be employed; such algorithms are widely available. In step (36), the results of the optimization are assessed. If further improvement appears necessary the optimization process is repeated, until such time as no further improvement appears possible. At that point the optimum or best fit is assessed from the optimisation results.

Timing offset may be taken into account in addition to differing codes, in which case complexity of computation increases. If we consider performing 511 cross correlations with accuracy of delay equals to half a chip, then each correlation requires 38400x2=76800 points to compute. This means we need to compute 76800x511 different multiplications and summation (this is how cross correlation is computed). So this is a large number of arithmetic operations to do. However, given that the scrambling codes are categorised into 64 different groups, we may do the computation based on performing 64-n cross correlations when n>1 and is the number of discovered codes. This way we reduce the computation by a factor of 8 without affecting the result.

Thus, an alternative to using pre-calculated matrices is to perform a real-time calculation of the best scrambling code and offset. In this case, the base station, after scanning the air interface to discover the scrambling codes being used by other cell and determining their offsets, performs the cross correlation of all scrambling codes in its database. It then selects the scrambling code and offset with the best (lowest) cross correlation. This gives the base station more flexibility in the decision making process, and eliminates the need for operators to continuously perform manual radio frequency cell planning (i.e. we make the network fully automated with the ability of parameters discovery and assignment). There is a need for allocating computational resources to perform this function, but the following two cases are addressed as follows:
1. Scrambling code and offset allocation upon power up: In this case, the small cells processor is only performing self set up prior to normal functioning of the cell. In this case, the cell is just working in a receive mode (network listening) and computing the best parameters to use. In other word, the processor is being used for this function only and once optimization has finished, then a different software image is loaded (i.e. computational resources re-use).
2. Scrambling code and offset re-configuration during operation (as part of continuous cell self-optimization). During normal operation it is expected that radio environment might change. For example, the relative delay between cells or frequency drift (due to oscillators drift) which results in the need to adjust the offset assigned to the cell. In this case, the small cell makes use of the measurement reports from UEs being attached to it. The small cell instructs UEs in its coverage area to perform measurements related to RSCP and offsets used by the neighbouring cells. These regular measurements provide continuous monitoring mechanism on actual alignment of the network.

## Claims

1. A method for transmission in a mobile telecommunications system, comprising:
Performing (20) a scanning or network listening operation in a first cell to monitor transmissions of one or more neighbouring cells, and determining scrambling codes of said transmissions and determining timing offsets, with respect to the timing of said first cell, of said transmissions; and
Providing (24, 26) a scrambling code and a timing offset for a scrambling code for use in transmissions within said first cell, **characterised by** the steps of
determining (28), either in a pre-characterisation step or in a real-time process, cross-correlation values between said codes of neighbouring cells and scrambling codes that may be employed in said first cell, and cross-correlation values as a function of timing offset between said codes of neighbouring cells and scrambling codes that may be employed in said first cell, the function comprising, for each pair of said codes of neighbouring cells and scrambling codes, offsetting the codes by the timing offset and computing a sum of the point multiplication of the codes, and
selecting (36), in dependence on said cross correlation values, a scrambling code and a timing offset for said first cell, which has a reduced likelihood of interference with transmissions of neighbouring cells
wherein in an initial characterisation process, one or more cross-correlation matrices are derived containing information as to cross-correlation values between scrambling codes that may be employed, and cross-correlation values as a function of timing offset that may be employed, and the method comprising employing said matrices as lookup tables in said steps of providing a scrambling code and timing offset.

2. A method according to claim 1, wherein the method comprises firstly said providing of a scrambling code, and secondly said providing of a relative timing offset which is appropriate for the provided scrambling code.

3. A method according to claim 1 or 2, wherein in a real-time operation, in the case where there is just a single transmission monitored of neighbouring cells, determining the lowest of said cross-correlation values, and selecting a scrambling code and/or in accordance therewith.

4. A method according to claim 1 or 2, wherein in a real-time operation, in the case where there is more than one transmission monitored of neighbouring cells, determining for each detected scrambling code of monitored transmissions, said cross-correlation values, and selecting by means of an optimisation process, an appropriate scrambling code and/or timing offset.

5. A method according to any preceding claim, wherein, in the case where there is more than one transmission monitored of neighbouring cells, determining received power values of said transmissions, and multiplying said received power values by said cross-correlation values, and then performing said selecting step in dependence on the multiplied values and additionally employing an optimisation process.

6. A method according claim 5, wherein said received power values are computed as an average of received power values detected at each user equipment within said first cell.

7. A method according to any preceding claim, wherein said listening operation is carried out by a base station of said first cell, said base station emulating user equipment in receive mode, and decoding system information messages of neighbouring cells.

8. A method according to any preceding claim, wherein said determining scrambling codes comprises determining primary downlink scrambling codes of neighbouring cells, and said providing comprises providing the primary downlink scrambling code of said first cell.

9. A method according to any preceding claim, wherein the method is carried out upon power up of a base station of said first cell, and/or at intervals during use of said base station.

10. Apparatus for a mobile telecommunications system, wherein the system includes
a base station means for communicating with user equipment within a first cell region, and the apparatus comprising scanning means or listening means for monitoring transmissions of one or more neighbouring cells, means for determining scrambling codes of said transmissions and for determining timing offsets of said codes, with respect to the timing of said first cell, of said transmissions, and is **characterised by** cross-correlation means for determining cross-correlation values between said scrambling codes and scrambling codes that may be employed in said first cell, and cross-correlation values as a function of timing offset between the determined codes and scrambling codes that may be employed, the function comprising, for each pair of the determined scrambling codes and scrambling codes that may be employed in said first cell, offsetting the codes by the timing offset and computing a sum of the point multiplication of the codes; and
means for selecting, in dependence on said cross-correlation values, a scrambling code and a timing offset for said first cell which has a reduced likelihood of interference with transmissions of neighbouring cells
wherein said means for determining scrambling codes includes cross-correlation matrix means, which includes information of cross-correlations between available scrambling codes, and information of cross-correlations as a function of relative timing offsets between available scrambling codes.

11. Apparatus according to claim 10, wherein said means for determining scrambling codes is arranged to determine both scrambling codes and time offsets, and said selecting means is arranged to select both a scrambling code and an appropriate timing offset therefor.

12. Apparatus according to claim 10 or 11, wherein said means for determining scrambling codes includes correlation means for determining in real-time, in the case where there is more than one transmission monitored of neighbouring cells, for each detected scrambling code of monitored transmissions, said cross-correlation values.

13. Apparatus according to claim 12, wherein the selecting means includes optimisation process means for determining an appropriate scrambling code and/or timing offset.

14. Apparatus according to any of claims 10 to 13, wherein said selecting means includes weighting means which, in the case where there is more than one transmission monitored of neighbouring cells, determines received power values of said transmissions, and multiplies said received power values by said cross-correlation values, and said selecting means being arranged to perform said selecting in dependence on the multiplied values.

15. Apparatus as claimed in claim 14, wherein said weighting means is arranged to compute said received power values are computed as an average of received power values detected at each user equipment within said first cell.

16. Apparatus as claimed in any of claims 10 to 15, which is comprised within a base station of said first cell, said base station being arranged to emulate user equipment in receive mode, and arranged to decode system information messages of neighbouring cells.

## Patentansprüche

1. Übertragungsverfahren in einem Mobilfunksystem, das Folgendes umfasst:
Ausführen (20) eines Abtast- oder Netzabhörvorgangs in einer ersten Zelle, um Übertragungen von einer oder mehreren benachbarten Zellen zu überwachen, und Bestimmen von Verwürfelungscodes der Übertragungen und Bestimmen von Zeitvorgabenversätzen der Übertragungen in Bezug auf die Zeitvorgabe der ersten Zelle und
Bereitstellen (24, 26) eines Verwürfelungscodes und eines Zeitvorgabenversatzes für einen Verwürfelungscode zur Verwendung in Übertragungen innerhalb der ersten Zelle, **gekennzeichnet durch** die Schritte des
Bestimmens (28) entweder in einem Vorcharakterisierungsschritt oder in einem Echtzeitprozess von Kreuzkorrelationswerten zwischen den Codes von benachbarten Zellen und Verwürfelungscodes, die in der ersten Zelle eingesetzt werden können, und von Kreuzkorrelationswerten als einer Funktion des Zeitvorgabenversatzes zwischen den Codes der benachbarten Zellen und Verwürfelungscodes, die in der ersten Zelle eingesetzt werden können, wobei die Funktion für jedes Paar der Codes von benachbarten Zellen und Verwürfelungscodes das Versetzen des Codes um den Zeitvorgabenversatz und das Berechnen einer Summe der punktweisen Multiplikation der Codes umfasst, und
Auswählens (36) in Abhängigkeit von den Kreuzkorrelationswerten eines Verwürfelungscodes und eines Zeitvorgabenversatzes für die erste Zelle, die eine verringerte Wahrscheinlichkeit für Interferenz mit Übertragungen von benachbarten Zellen aufweist,
wobei in einem anfänglichen Charakterisierungsprozess eine oder mehrere Kreuzkorrelationsmatrizen abgeleitet werden, die Informationen über Kreuzkorrelationswerte zwischen Verwürfelungscodes, die eingesetzt werden können, und über Kreuzkorrelationswerte als Funktion eines Zeitvorgabenversatzes, der eingesetzt werden kann, enthalten, und das Verfahren das Einsetzen dieser Matrizen als Verweistabelle in den Schritten des Bereitstellens eines Verwürfelungscodes und eines Zeitvorgabenversatzes umfasst.

2. Verfahren nach Anspruch 1, wobei das Verfahren zuerst das Bereitstellen eines Verwürfelungscodes und als dann das Bereitstellen eines relativen Zeitvorgabenversatzes, der für den bereitgestellten Verwürfelungscode geeignet ist, umfasst.

3. Verfahren nach Anspruch 1 oder 2, wobei in einem Echtzeitvorgang dann, wenn es nur eine einzige Übertragung gibt, die von benachbarten Zellen überwacht wird, der niedrigste der Kreuzkorrelationswerte bestimmt wird und ein Verwürfelungscode ausgewählt wird und/oder in Übereinstimmung damit.

4. Verfahren nach Anspruch 1 oder 2, wobei in einem Echtzeitvorgang dann, wenn es mehr als eine Übertragung gibt, die von benachbarten Zellen überwacht wird, die Kreuzkorrelationswerte für jeden detektierten Verwürfelungscode der überwachten Übertragungen bestimmt werden und ein geeigneter Verwürfelungscode und/oder ein Zeitvorgabenversatz mittels eines Optimierungsprozesses ausgewählt werden.

5. Verfahren nach einem der vorhergehenden Ansprüche, wobei dann, wenn es mehr als eine Übertragung gibt, die von benachbarten Zellen überwacht wird, empfangene Leistungswerte der Übertragungen bestimmt werden und die empfangenen Leistungswerte mit den Kreuzkorrelationswerten multipliziert werden und dann der Auswahlschritt in Abhängigkeit von den multiplizierten Werten ausgeführt wird und zusätzlich ein Optimierungsprozess eingesetzt wird.

6. Verfahren nach Anspruch 5, wobei die empfangenen Leistungswerte als ein Durchschnitt von empfangenen Leistungswerten, die an jedem Anwendergerät innerhalb der ersten Zelle detektiert werden, berechnet werden.

7. Verfahren nach einem der vorhergehenden Ansprüche, wobei der Abhörvorgang durch eine Basisstation der ersten Zelle ausgeführt wird, wobei die Basisstation ein Anwendergerät im Empfangsmodus emuliert und Systeminformationsnachrichten von benachbarten Zellen decodiert.

8. Verfahren nach einem der vorhergehenden Ansprüche, wobei das Bestimmen von Verwürfelungscodes das Bestimmen von primären Downlink-Verwürfelungscodes von benachbarten Zellen umfasst und das Bereitstellen das Bereitstellen des primären Downlink-Verwürfelungscodes der ersten Zelle umfasst.

9. Verfahren nach einem der vorhergehenden Ansprüche, wobei das Verfahren beim Einschalten einer Basisstation der ersten Zelle und/oder in Abständen während der Verwendung der Basisstation ausgeführt wird.

10. Vorrichtung für ein Mobilfunksystem, wobei das System Folgendes umfasst:
ein Basisstationsmittel zum Kommunizieren mit Anwendergeräten innerhalb eines Gebiets einer ersten Zelle, wobei die Vorrichtung Abtastmittel oder Abhörmittel zum Überwachen von Übertragungen von einer oder mehreren benachbarten Zellen, Mittel zum Bestimmen von Verwürfelungscodes der Übertragungen und zum Bestimmen von Zeitvorgabenversätzen der Codes der Übertragungen in Bezug auf die Zeitvorgabe der ersten Zelle umfasst und **gekennzeichnet ist durch**
Kreuzkorrelationsmittel zum Bestimmen der Kreuzkorrelationswerte zwischen den Verwürfelungscodes, die in der ersten Zelle eingesetzt werden können, und der Kreuzkorrelationswerte als einer Funktion des Zeitvorgabenversatzes zwischen den bestimmten Codes und Verwürfelungscodes, die eingesetzt werden können, wobei die Funktion für jedes Paar der bestimmten Verwürfelungscodes und der Verwürfelungscodes, die in der ersten Zelle eingesetzt werden können, das Versetzen der Codes um den Zeitvorgabenversatz und das Berechnen einer punktweisen Multiplikation der Codes umfasst, und
Mittel zum Auswählen in Abhängigkeit von den Kreuzkorrelationswerten eines Verwürfelungscodes und eines Zeitvorgabenversatzes für die erste Zelle, die eine verringerte Wahrscheinlichkeit für Interferenz mit Übertragungen von benachbarten Zellen aufweist,
wobei die Mittel zum Bestimmen des Verwürfelungscodes Kreuzkorrelationsmatrixmittel umfassen, die Informationen über Kreuzkorrelationen zwischen verfügbaren Verwürfelungscodes und Informationen von Kreuzkorrelationen als Funktion von relativen Zeitvorgabenversätzen zwischen verfügbaren Verwürfelungscodes enthalten.

11. Vorrichtung nach Anspruch 10, wobei die Mittel zum Bestimmen von Verwürfelungscodes ausgelegt sind, sowohl Verwürfelungscodes als auch Zeitvorgabenversätze zu bestimmen, und die Auswahlmittel ausgelegt sind, sowohl einen Verwürfelungscode als auch einen geeigneten Zeitvorgabenversatz dafür auszuwählen.

12. Vorrichtung nach Anspruch 10 oder 11, wobei die Mittel zum Bestimmen von Verwürfelungscodes Korrelationsmittel umfassen, um dann, wenn es mehr als eine Übertragung gibt, die von benachbarten Zellen überwacht wird, die Kreuzkorrelationswerte für jeden detektierten Verwürfelungscode der überwachten Übertragungen in Echtzeit zu bestimmen.

13. Vorrichtung nach Anspruch 12, wobei die Auswahlmittel Optimierungsprozessmittel zum Bestimmen eines geeigneten Verwürfelungscodes und/oder Zeitvorgabenvorsatzes umfassen.

14. Vorrichtung nach einem der Ansprüche 10 bis 13, wobei die Auswahlmittel Gewichtungsmittel umfassen, die dann, wenn es mehr als eine Übertragung gibt, die von benachbarten Zellen überwacht wird, empfangene Leistungswerte der Übertragungen bestimmen und die empfangenen Leistungswerte mit den Kreuzkorrelationswerten multiplizieren, wobei die Auswahlmittel ausgelegt sind, das Auswählen in Abhängigkeit von den multiplizierten Werten durchzuführen.

15. Vorrichtung nach Anspruch 14, wobei die Gewichtungsmittel ausgelegt sind, die empfangenen Leistungswerte als einen Durchschnitt der empfangenen Leistungswerte, die an jedem Anwendergerät innerhalb der ersten Zelle detektiert werden, zu berechnen.

16. Vorrichtung nach einem der Ansprüche 10 bis 15, die in einer Basisstation der ersten Zelle enthalten ist, wobei die Basisstation ausgelegt ist, ein Anwendergerät im Empfangsmodus zu emulieren, und ausgelegt ist, Systeminformationsnachrichten von benachbarten Zellen zu decodieren.

## Revendications

1. Procédé de transmission dans un système de télécommunications mobiles, comprenant :
l'exécution (20) d'une opération de balayage ou d'écoute réseau dans une première cellule pour contrôler des transmissions d'une ou de plusieurs cellules voisines, et la détermination de codes de brouillage desdites transmissions et la détermination de décalages temporels, relativement au cadencement de ladite première cellule, desdites transmissions ; et
la fourniture (24, 26) d'un code de brouillage et d'un décalage temporel d'un code de brouillage à utiliser dans des transmissions dans ladite première cellule, **caractérisé par** les étapes de
détermination (28), soit dans une étape de précaractérisation, soit dans un processus en temps réel, de valeurs de corrélations croisées entre lesdits codes de cellules voisines et des codes de brouillages qui peuvent être employés dans ladite première cellule, et de valeurs de corrélations croisées en fonction d'un décalage temporel entre lesdits codes de cellules voisines et des codes de brouillages qui peuvent être employés dans ladite première cellule, la fonction comprenant, pour chaque paire desdits codes de cellules voisines et de codes de brouillage, le décalage des codes par le décalage temporel et le calcul d'une somme de la multiplication de points des codes, et
la sélection (36), en fonction desdites valeurs de corrélations croisées, d'un code de brouillage et d'un décalage temporel pour ladite première cellule, laquelle a une probabilité réduite de brouillage avec des transmissions de cellules voisines
dans lequel dans un processus de caractérisation initiale, une ou plusieurs matrices de corrélations croisées sont dérivées contenant des informations sur des valeurs de corrélations croisées entre des codes de brouillage qui peuvent être employés, et des valeurs de corrélations croisées en fonction d'un décalage temporel qui peut être employé, et le procédé comprenant l'emploi desdites matrices en tant que tables de consultation dans lesdites étapes de fourniture d'un code de brouillage et d'un décalage temporel.

2. Procédé selon la revendication 1, dans lequel le procédé comprend premièrement ladite fourniture d'un code de brouillage, et deuxièmement ladite fourniture d'un décalage temporel relatif qui est approprié pour le code de brouillage fourni.

3. Procédé selon la revendication 1 ou 2, comprenant dans une opération en temps réel, dans le cas où il n'existe qu'une seule transmission contrôlée de cellules voisines, la détermination de la plus basse desdites valeurs de corrélations croisées, et la sélection d'un code de brouillage et/ou conformément à celui-ci.

4. Procédé selon la revendication 1 ou 2, comprenant dans une opération en temps réel, s'il existe plus d'une transmission contrôlée de cellules voisines, la détermination pour chaque code de brouillage détecté de transmissions contrôlées, desdites valeurs de corrélations croisées, et la sélection au moyen d'un processus d'optimisation, d'un code de brouillage et/ou décalage temporel approprié.

5. Procédé selon n'importe quelle revendication précédente, comprenant, dans le cas où il existe plus d'une transmission contrôlée de cellules voisines, la détermination de valeurs de puissance reçues desdites transmissions, et la multiplication desdites valeurs de puissance reçues par lesdites valeurs de corrélations croisées, puis l'exécution de ladite étape de sélection en fonction des valeurs multipliées et en utilisant en outre un processus d'optimisation.

6. Procédé selon la revendication 5, dans lequel lesdites valeurs de puissance reçues sont calculées en tant que moyenne de valeurs de puissance reçues détectée au niveau de chaque équipement utilisateur dans ladite première cellule.

7. Procédé selon n'importe quelle revendication précédente, dans lequel ladite opération d'écoute est exécutée par une station de base de ladite première cellule, ladite station de base émulant un équipement utilisateur en mode de réception, et décodant des messages d'informations système de cellules voisines.

8. Procédé selon n'importe quelle revendication précédente, dans lequel ladite détermination de codes de brouillage comprend la détermination de codes de brouillage de liaison descendante principale de cellules voisines, et ladite fourniture comprend la fourniture du code de brouillage de liaison descendante principale de ladite première cellule.

9. Procédé selon n'importe quelle revendication précédente, le procédé étant exécuté à la mise en marche d'une station de base de ladite première cellule, et/ou à des intervalles durant l'utilisation de ladite station de base.

10. Appareil pour système de télécommunications mobiles, le système comportant :
un moyen de station de base pour communiquer avec un équipement utilisateur dans une première région cellulaire, et l'appareil comprenant un moyen de balayage ou un moyen d'écoute pour contrôler des transmissions d'une ou de plusieurs cellules voisines, un moyen de détermination de codes de brouillage desdites transmissions et de détermination de décalages temporels desdits codes, relativement au cadencement de la première cellule, desdites transmissions, et est **caractérisé par**
un moyen de corrélations croisées pour déterminer des valeurs de corrélations croisées entre lesdits codes de brouillage et des codes de brouillage qui peuvent être employés dans ladite première cellule, et des valeurs de corrélations croisées en fonction d'un décalage temporel entre les codes déterminés et des codes de brouillage qui peuvent être employés, la fonction comprenant, pour chaque paire des codes de brouillage déterminés et des codes de brouillage qui peuvent être employés dans ladite première cellule, le décalage des codes par le décalage temporel et le calcul d'une somme de la multiplication de points des codes ; et
un moyen de sélection, en fonction desdites valeurs de corrélations croisées, d'un code de brouillage et d'un décalage temporel pour ladite première cellule qui a une probabilité réduite de brouillage avec des transmissions de cellules voisines
dans lequel ledit moyen de détermination de codes de brouillage comporte des moyens de matrices de corrélations croisées, lesquelles comportent des informations de corrélations croisées entre des codes de brouillage possibles, et des informations de corrélations croisées en fonction de décalages temporels relatifs entre des codes de brouillage possibles.

11. Appareil selon la revendication 10, dans lequel ledit moyen de détermination de codes de brouillage est agencé pour déterminer à la fois des codes de brouillage et des décalages temporels, et ledit moyen de sélection est agencé pour sélectionner à la fois un code de brouillage et un décalage temporel approprié pour celui-ci .

12. Appareil selon la revendication 10 ou 11, dans lequel ledit moyen de détermination de codes de brouillage comporte des moyens de corrélation pour déterminer en temps réel, dans le cas où il n'existe qu'une seule transmission contrôlée de cellules voisines, pour chaque code de brouillage détecté de transmissions contrôlées, lesdites valeurs de corrélations croisées.

13. Appareil selon la revendication 12, dans lequel le moyen de sélection comporte un moyen de processus d'optimisation pour déterminer un code de brouillage et/ou décalage temporel approprié.

14. Appareil selon l'une quelconque des revendications 10 à 13, dans lequel ledit moyen de sélection comporte un moyen de pondération qui, dans le cas où il existe plus d'une transmission contrôlée de cellules voisines, détermine des valeurs de puissance reçues desdites transmissions, et multiplie lesdites valeurs de puissance reçues par lesdites valeurs de corrélations croisées, et ledit moyen de sélection étant agencé pour exécuter ladite sélection en fonction des valeurs multipliées.

15. Appareil selon la revendication 14, dans lequel ledit moyen de pondération est agencé pour calculer lesdites valeurs de puissance reçues en tant que moyenne de valeurs de puissance reçues détectée au niveau de chaque équipement utilisateur dans ladite première cellule.

16. Appareil selon l'une quelconque des revendications 10 à 15, lequel est compris dans une station de base de ladite première cellule, ladite station de base étant agencée pour émuler un équipement utilisateur en mode de réception, et agencée pour décoder des messages d'informations système de cellules voisines.
